(19) Europäisches Patentamt / European Patent Office / Office européen des brevets

(11) **EP 4 503 234 A1**

(12) **EUROPEAN PATENT APPLICATION**
published in accordance with Art. 153(4) EPC

(43) Date of publication:
05.02.2025 Bulletin 2025/06

(21) Application number: 22935597.9

(22) Date of filing: 28.09.2022

(51) International Patent Classification (IPC):
$H01M\ 10/0585^{(2010.01)}$    $H01M\ 4/131^{(2010.01)}$
$H01M\ 4/134^{(2010.01)}$    $H01M\ 4/36^{(2006.01)}$
$H01M\ 4/38^{(2006.01)}$    $H01M\ 4/485^{(2010.01)}$
$H01M\ 4/66^{(2006.01)}$    $H01M\ 10/0562^{(2010.01)}$

(52) Cooperative Patent Classification (CPC):
H01M 4/131; H01M 4/134; H01M 4/36; H01M 4/38;
H01M 4/485; H01M 4/66; H01M 10/0562;
H01M 10/0585; Y02E 60/10; Y02P 70/50

(86) International application number:
PCT/JP2022/036171

(87) International publication number:
WO 2023/188466 (05.10.2023 Gazette 2023/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.03.2022 JP 2022058998

(71) Applicant: TDK Corporation
Tokyo 103-6128 (JP)

(72) Inventors:
• TAKEUCHI, Keiko
 Tokyo 103-6128 (JP)

• NAKAMURA, Tomoko
 Tokyo 103-6128 (JP)
• NAGATOMI, Ayaka
 Tokyo 103-6128 (JP)
• YAMAGUCHI, Yuusuke
 Tokyo 103-6128 (JP)
• SUZUKI, Shota
 Tokyo 103-6128 (JP)

(74) Representative: Epping - Hermann - Fischer
Patentanwaltsgesellschaft mbH
Schloßschmidstraße 5
80639 München (DE)

(54) **ALL-SOLID-STATE SECONDARY BATTERY**

(57) This all-solid-state secondary battery includes a laminate including a positive electrode layer, a negative electrode layer, and a solid electrolyte layer interposed between the positive electrode layer and the negative electrode layer. The solid electrolyte layer includes a compound represented by Expression (1), the negative electrode layer includes an Ag-containing phase, a plurality of voids are formed in the negative electrode layer, and at least a part of the voids are first voids formed in contact with the Ag-containing phase:

$$Li_{3+x}Si_xP_{1-x}O_4 \qquad (1)$$

(where $0<x<1$ is satisfied in Expression (1)).

**(Cont. next page)**

FIG. 1

## Description

Technical Field

The present invention relates to an all-solid-state secondary battery.

The present application claims priority on Japanese Patent Application No. 2022-058998 filed on March 31, 2022, the content of which is incorporated herein by reference.

Background Art

In recent years, development of electronics technology has progressed actively, and a decrease in size, weight, and thickness and multi-functionalization of portable electronic devices have been achieved. Therewith, strong demand for a decrease in size, weight, and thickness and improvement in reliability of batteries serving as power sources of electronic devices has emerged. In lithium-ion secondary batteries which are widely used, an electrolyte (an electrolytic solution) including an organic solvent has been used as a medium for moving ions in the related art. However, a battery having this configuration has a risk of leakage of an electrolytic solution. Since the organic solvent or the like used in the electrolytic solution is a combustible material, demand for further enhancement in safety of batteries has emerged.

As a countermeasure for enhancing safety of a battery, it has been proposed that a solid electrolyte be used instead of an electrolytic solution. Development of an all-solid-state secondary battery in which a solid electrolyte is used as an electrolyte and the other constituents are solid has progressed (for example, Patent Document 1).

Sulfide-based solid electrolytes and oxide-based solid electrolytes are mainly used as a solid electrolyte of an all-solid-state secondary battery. Since a sulfide-based solid electrolyte generates hydrogen sulfide through a reaction with water, a battery needs to be manufactured in a glove compartment in which a dew point is managed. A sulfide-based solid electrolyte is not easily made into a sheet, and demand for a solid electrolyte that can contribute to a decrease in size, weight, and thickness and multi-functionalization of portable electronic devices and that can be decreased in thickness has emerged. In consideration of these circumstances, oxide-based solid electrolytes are expected to be used.

LSPO ($Li_{3+x}Si_xP_{1-x}O_4$) or the like is known as an oxide-based solid electrolyte (Non-Patent Document 1). It is known that LSPO is relatively stable to active materials when it is sintered at a high temperature for densification.

Citation List

Patent Document

Patent Document 1: Japanese Unexamined Patent Application, First Publication No. 2022-25903 (A)

Non-Patent Document

Non-Patent Document 1: Solid State Ionics 283(2015), pages 109 to 114

Summary of Invention

Technical Problem

An oxide-based solid electrolyte needs to be sintered at a high temperature for densification. At this time, the oxide-based solid electrolyte may react with an active material and forms a reactive layer with low ion conductivity at an interface. In order to prevent the formation of such a reactive layer, a method of using LSPO as a solid electrolyte has been investigated. For example, use of Ag, an AgPd alloy, or a material including an AgPd alloy and lithium titanate ($Li_4Ti_5O_{12}$) for a negative electrode is expected to cause realization of an all-solid-state secondary battery in which a reactive layer is less likely to be formed.

In an all-solid-state secondary battery, demand for improvement in cycling characteristics has emerged. Cycling characteristics of a laminated-chip type all-solid-state secondary battery deteriorate because expansion and contraction of active materials occur at the time of charging and discharging and cracks or peeling occurs in the inside of an electrode or at an interface with a solid electrolyte or the like. Cracks or peeling needs to be prevented for improvement in cycling characteristics. In a case where LSPO is used as the solid electrolyte and an Ag-containing phase, for example, Ag, an AgPd alloy, or an AgPd alloy or lithium titanate is used as the negative electrode, there is a problem in that the cycling characteristics are poor.

The present invention was made in consideration of the aforementioned circumstances, and an objective thereof is to provide an all-solid-state secondary battery that can relax a stress due to expansion and contraction of a negative electrode and improve cycling characteristics.

Solution to Problem

The following solutions are provided to achieve the aforementioned objective.
(1) An all-solid-state secondary battery including a laminate including a positive electrode layer, a negative electrode layer, and a solid electrolyte layer interposed between the positive electrode layer and the negative electrode layer, wherein the solid electrolyte layer includes a compound represented by Expression (1), the negative electrode layer includes an Ag-containing phase, a plurality of voids are formed in the negative electrode layer, and at least a part of the voids are first voids formed in contact with the Ag-containing phase:

$$Li_{3+x}Si_xP_{1-x}O_4 \qquad (1)$$

(where $0<x<1$ is satisfied in Expression (1)).
(2) In the all-solid-state secondary battery according to the aspect, a diameter of the first voids may be equal to or greater than 0.01 $\mu$m and equal to or less than 3.0 $\mu$m.
(3) In the all-solid-state secondary battery according to the aspect, a volume proportion of the first voids which are formed in contact with the Ag-containing phase in the negative electrode layer may be equal to or greater than 1% and equal to or less than 10%.
(4) In the all-solid-state secondary battery according to the aspect, an aspect ratio of a length of the voids in an extending direction of the negative electrode layer to a length of the first voids in a stacking direction of the laminate may be equal to or greater than 3.
(5) In the all-solid-state secondary battery according to the aspect, at least a part of the voids formed in contact with the Ag-containing phase may be second voids which are formed at an interface between the solid electrolyte layer and the Ag-containing phase.
(6) In the all-solid-state secondary battery according to the aspect, a ratio of the second voids to the total first voids may be in a range of 80% to 100%.
(7) In the all-solid-state secondary battery according to the aspect, the negative electrode layer may consist of the Ag-containing phase.
(8) In the all-solid-state secondary battery according to the aspect, the negative electrode layer may include a first phase which includes the Ag-containing phase and a second phase which includes lithium titanate and which sandwiches the first phase in a stacking direction, and the negative electrode layer may include third voids which are in contact with an interface between the first phase and the second phase.
(9) In the all-solid-state secondary battery according to the aspect, a ratio of the third voids to the total first voids may be in a range of 50% to 100%.

Advantageous Effects of Invention

The all-solid-state secondary battery according to the aspect can relax a stress due to expansion and contraction of a negative electrode and improve cycling characteristics.

Brief Description of Drawings

[FIG. 1] a sectional view schematically illustrating an all-solid-state secondary battery according to an embodiment.
[FIG. 2] an enlarged sectional view illustrating a part in the vicinity of a negative electrode layer of the all-solid-state secondary battery illustrated in FIG. 1.
[FIG. 3] an enlarged sectional view illustrating a part in the vicinity of a negative electrode layer of an all-solid-state secondary battery according to a modified example in FIG. 1.

Description of Embodiments

Hereinafter, an all-solid-state secondary battery according to an embodiment will be described in detail with appropriate reference to the accompanying drawings. In the drawings used in the following description, feature parts may be conveniently enlarged for the purpose of easy understanding of features of the present invention, and dimensional ratios and the like of constituents may be different from actual ones. Materials, dimensions, and the like mentioned in the following description are merely examples, and the present invention is not limited thereto and can be appropriately modified as long as advantageous effects of the present invention can be achieved.

[All-solid-state secondary battery]

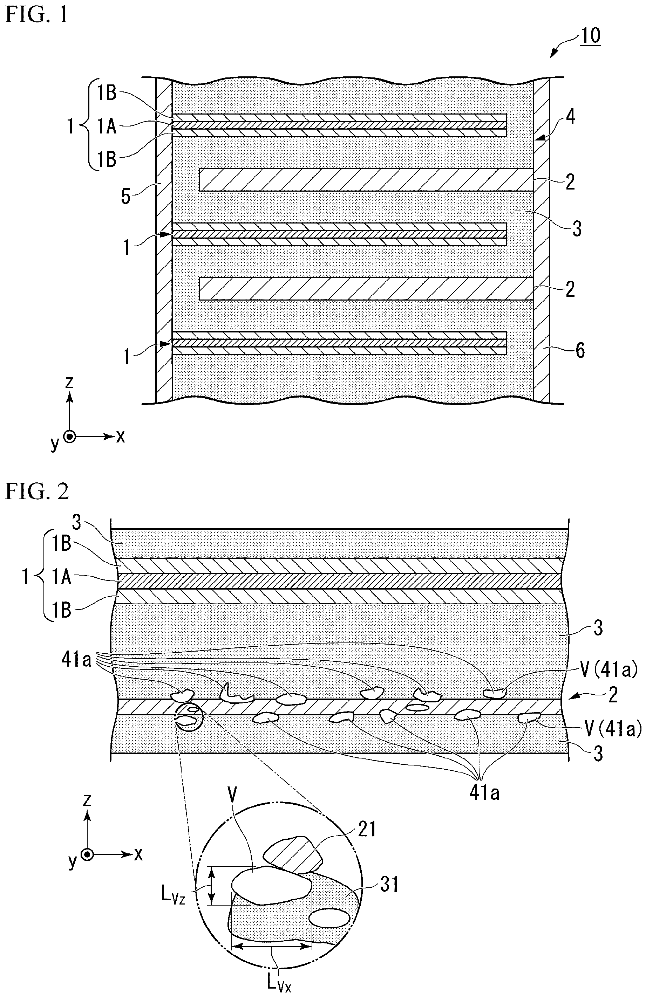

FIG. 1 is a sectional view schematically illustrating an example of an all-solid-state secondary battery according to an embodiment. FIG. 2 is an enlarged sectional view illustrating a part in the vicinity of a negative electrode layer of the all-solid-state secondary battery illustrated in FIG. 1. In FIG. 2, an enlarged view schematically illustrating a part in the vicinity of one void is also illustrated.

The all-solid-state secondary battery 10 illustrated in FIGS. 1 and 2 includes a laminate 4, a positive electrode terminal 5, and a negative electrode terminal 6. The positive electrode terminal 5 and the negative electrode terminal 6 are in contact with opposite surfaces of the laminate 4. The positive electrode terminal 5 and the negative electrode terminal 6 extend in a direction crossing (perpendicular to) a stacking surface of the laminate 4. In this embodiment, an extending direction of a negative electrode layer 2 may be referred to as an x direction, a stacking direction of the laminate 4 may be referred to as a z direction, and a direction perpendicular to the x direction and the z direction may be referred to as a y direction.

The laminate 4 includes a positive electrode layer 1, a negative electrode layer 2, and a solid electrolyte layer 3 interposed between the positive electrode layer 1 and the negative electrode layer 2. The laminate 4 is a sintered body formed by stacking the positive electrode layer 1 and the negative electrode layer 2 with the solid electrolyte layer 3 interposed therebetween and sintering the resultant body. The number of layers in each of the positive electrode layer 1 and the negative electrode layer 2 included in the laminate 4 may be one or two or more. As illustrated in FIG. 1, the solid electrolyte layer 3 is present between the positive electrode layer 1 and the negative electrode terminal 6 and between the negative electrode layer 2 and the positive electrode terminal 5 in addition to between the positive electrode layer 1 and the negative electrode layer 2. As illustrated in FIG. 1, one end of the positive electrode layer 1 is connected to the positive electrode terminal 5. One end of the negative electrode layer 2 is connected to the negative electrode terminal 6.

The all-solid-state secondary battery 10 is charged or discharged through transmission and reception of ions via the solid electrolyte layer 3 between the positive electrode layer 1 and the negative electrode layer 2. In this embodiment, the laminated all-solid-state secondary battery 10 illustrated in FIG. 1 will be described as an example.

<Solid electrolyte layer>

The solid electrolyte layer 3 can move ions on the basis of an electric field which is externally applied. For example, the solid electrolyte layer 3 transmits lithium ions and blocks movement of electrons. The solid electrolyte layer 3 includes LSPO represented by Expression (1):

$$Li_{3+x}Si_xP_{1-x}O_4 \qquad (1)$$

(where $0<x<1$ is satisfied in Expression (1)).

The solid electrolyte layer 3 includes, for example, LSPO as a major component and preferably consists of LSPO. In this embodiment, when it is mentioned that the solid electrolyte layer 3 includes LSPO as a major component, it means that an amount of LSPO in the solid electrolyte layer 3 is equal to or greater than 80 vol%.

<Positive electrode layer>

The positive electrode layer 1 includes, for example, a positive-electrode current collector 1A and a positive-electrode active material layer 1B. The positive-electrode active material layer 1B may be formed on both surfaces of the positive-electrode current collector 1A as illustrated in FIG. 1 or may be formed on only one surface thereof.

(Positive-electrode current collector)

The positive-electrode current collector 1A is formed of a material having high electrical conductivity. The positive-electrode current collector 1A includes, for example, a conductive material such as a metal such as silver, palladium, gold, platinum, aluminum, copper, nickel, stainless steel, or iron, an alloy thereof, and a conductive resin. The positive-electrode current collector 1A may include, for example, a positive-electrode active material such as a lithium cobalt oxide ($LiCoO_2$) or a lithium vanadium compound ($LiV_2O_5$, $Li_3V_2(PO_4)_3$, $LiVOPO_4$). The positive-electrode current collector 1A may have a form such as a powder, a foil, a punched piece, or an expanded piece.

(Positive-electrode active material layer)

The positive-electrode active material layer 1B includes a positive-electrode active material. The positive-electrode active material layer 1B may include a conductive assistant and a solid electrolyte.

(Positive-electrode active material)

The positive-electrode active material is not particularly limited as long as release and insertion of lithium ions and desorption and insertion of lithium ions can progress reversibly. For example, a positive-electrode active material used in a known lithium-ion secondary battery can be used.

For example, the positive-electrode active material is preferably one type or two or more types selected from complex transition metal oxides and transition metal complex oxides.

Examples of the positive-electrode active material include lithium cobalt oxide ($LiCoO_2$), lithium nickel oxide ($LiNiO_2$), spinel lithium manganese oxide ($LiMn_2O_4$), complex metal oxide represented by a formula: $LiNi_xCo_yMn_{zMa}O_2$ ($x+y+z+a=1$, $0 \leq x \leq 1$, $0 \leq y \leq 1$, $0 \leq z \leq 1$, $0 \leq a \leq 1$, M is one or more elements selected from Al, Mg, Nb, Ti, Cu, Zn, and Cr), and lithium titanate ($Li_4Ti_5O_{12}$).

A positive-electrode active material not including lithium may be used as the positive-electrode active material. The positive-electrode active material not including lithium can be utilized by providing a negative-electrode active material doped with metal lithium and/or lithium ions in the negative electrode layer 2 in advance and starting discharging of the all-solid-state secondary battery 10. An example of the positive-electrode active material not including lithium is a metal oxide (such as $MnO_2$ or $V_2O_5$).

(Conductive assistant)

The conductive assistant is not particularly limited as long as electron conductivity in the positive-electrode active material layer 1B can be improved, and known conductive assistants can be used. Examples of the conductive assistant include carbon-based materials such as graphite, carbon black, graphene, and carbon nanotubes, metals such as gold, platinum, silver, palladium, aluminum, copper, nickel, stainless steel, and iron, conductive oxides such as indium tin oxide (ITO), and mixtures thereof. The conductive assistant may be in the form powder or fibers.

The solid electrolyte included in the positive-electrode active material layer 1B enhances ion conductivity in the positive-electrode active material layer 1B. One type of known material or two or more types of known materials as a mixture can be used as the solid electrolyte. The same compound as the compound forming the solid electrolyte layer 3 can be preferably used in view of improvement in adhesiveness between the solid electrolyte layer 3 and the positive electrode layer 1.

<Negative electrode layer>

The negative electrode layer 2 illustrated in FIGS. 1 and 2 serves as both a negative-electrode current collector and a negative-electrode active material layer. The negative electrode layer 2 includes an Ag-containing phase 21 which is either one of Ag or an AgPd alloy and may additionally include lithium titanate ($Li_4Ti_5O_{12}$). The negative electrode layer 2 is formed of a substance having a lower potential than the positive-electrode active material. Voids V in contact with the Ag-containing phase 21 are formed in the negative electrode layer 2.

The negative electrode layer 2 includes, for example, a plurality of voids V. The plurality of voids V are classified into first voids 41 which are voids in contact with the Ag-containing phase 21 and voids 42 which are not in contact with the Ag-containing phase 21. The first voids 41 are further classified into second voids 41a and third voids 41b. The second voids 41a are voids in contact with an interface between the solid electrolyte layer 3 and the Ag-containing phase 21. The third voids 41b are voids in contact with an interface between the first phase 21 (the Ag-containing phase 21) and a second phase 22 formed of lithium titanate.

The second voids 41a and the third voids 41b are basically mutually exclusive.

Each of the plurality of voids V is formed, for example, in a part of an interface between the Ag-containing phase 21 and the solid electrolyte of the solid electrolyte layer 3, and all the voids V may be formed in a part of the interface between the Ag-containing phase and the solid electrolyte. That is, each of the plurality of voids V is present, for example in contact with a part of an interface between LSPO 31 and the Ag-containing phase 21, and all the voids V are preferably in contact with a part of the interface between the LSPO 31 and the Ag-containing phase 21. In a case where the negative electrode layer 2 includes lithium titanate, each of the plurality of voids V may be formed, for example, at a part of an interface between the Ag-containing phase and the lithium titanate.

A volume proportion (a void ratio) of the voids in the negative electrode layer 2 is, for example, equal to or greater than 0.1% and equal to or less than 20%, preferably equal to or greater than 1% and equal to or less than 10%, and more preferably equal to or greater than 1% and equal to or less than 5%.

The volume proportion of the first voids 41 in the negative electrode layer 2 may be equal to or greater than 1% and equal to or less than 10% or may be equal to or greater than 1% and equal to or less than 5%.

The ratio of the second voids to all the first voids may be equal to or greater than 80% and equal to or less than 100%.

The ratio of the third voids to all the first voids may be equal to or greater than 50% and equal to or less than 100% or may be equal to or greater than 80% and equal to or less than 100%.

The volume proportion of the voids V in the negative electrode layer 2 is calculated on the basis of an electron microscope image. Specifically, regions of the voids V in the negative electrode layer 2 are confirmed and the volume proportion thereof is calculated by the following procedures.

First, a scanning electron microscope image of a cross-section parallel to the stacking direction of the laminate 4 is obtained, and a region of the negative electrode layer 2 is confirmed on the basis of the scanning electron microscope image. The negative electrode layer 2 is considered as a region between two solid electrolyte layers in the scanning electron microscope image and is confirmed through image analysis. The area of the negative electrode layer 2 is calculated through image analysis.

Subsequently, a phase corresponding to voids is separated from a phase corresponding to the other regions through image processing of binarizing the scanning electron microscope image on the basis of brightness. The binarization of the scanning electron microscope image is performed by preparing an image density histogram using a mode method and using an image density range of a valley corresponding to a boundary between a targeted phase and another phase as a threshold value. That is, the image is divided into a "dark region" and a "bright region" on the basis of the threshold value to perform the binarization. **In** the image density histogram, two or more valleys may be formed. In this case, the void is a region with low brightness in the scanning electron microscope image, a valley between a peak with the lowest brightness and a peak with the second lowest brightness is selected as a valley corresponding to a boundary, and an image density value of the valley can be selected as the threshold value.

A region with the lowest brightness is considered as a void. The total area of voids in contact with an alloy such as AgPd or a metal such as Ag in the negative electrode layer 2 is calculated through image analysis. The total areas of the voids and the negative electrode layer are calculated, for example, using the same scanning electron microscope image with a magnification of 1000 to 5000. In this way, by calculating the area of the negative electrode layer 2 and the area of the voids V and dividing the area of the voids V by the area of the negative electrode layer 2, the volume proportion (the void ratio) of the voids V in the negative electrode layer 2 is calculated.

In this embodiment, regarding the diameter of a void V, a circle having the same area as a region of which brightness is equal to or less than a predetermined value through the binarization and which is determined as a void is assumed, and a diameter of the circle is estimated to be the diameter of the void V.

An aspect ratio ($L_{Vx}/L_{Vz}$) of a length $L_{Vx}$ of a void in the extending direction of the negative electrode layer 2 to a length $L_{Vz}$ of the void V in the stacking direction of the laminate 4 is, for example, equal to or greater than 1 and preferably equal to or greater than 3. The aspect ratio of each void V is calculated by analyzing an electron microscope image which has been binarized in the same procedures as described above. That is, the length $L_{Vx}$ in the extending direction of the negative electrode layer 2 and the length $L_{Vz}$ of a void V in the stacking direction are calculated through image analysis of the void V confirmed by binarizing the electron microscope image. Subsequently, the aspect ratio of each void V is calculated by dividing the length $L_{Vzx}$ of the void V by the length $L_{Vz}$. In this embodiment, the aspect ratios of voids V at 10 arbitrary positions in the electron microscope image are calculated, and an arithmetic mean thereof is handled as the aspect ratio of the length $L_{Vx}$ of a void V in the extending direction of the negative electrode layer 2 to the length $L_{Vz}$ of the void V in the stacking direction of the laminate 4.

The voids V in the negative electrode layer 2 preferably have an axial direction thereof in the extending direction of the negative electrode layer 2. For example, it is preferable that the aspect ratio ($L_{Vx}/L_{Vz}$) be larger than 1 and the extending direction of a void be substantially parallel to the extending direction of the negative electrode layer 2.

It is preferable that a plurality of voids V in the negative electrode layer 2 be connected to form a network structure. It is preferable that the voids V in the negative electrode layer 2 have the network structure and be in contact with AgPd alloy particles in the x direction and the z direction. Since voids having this structure are provided, it is possible to easily relax a stress in various directions.

The negative electrode layer 2 may include a conductive assistant and a solid electrolyte in addition to particles of at least one of the metal particles and the alloy particles.

(Conductive assistant)

The conductive assistant enhances electron conductivity in the negative electrode layer 2. The same material as that in the positive-electrode active material layer 1B can be used as the conductive assistant.

(Solid electrolyte)

The solid electrolyte included in the negative electrode layer 2 enhances ion conductivity in the negative electrode layer 2. One type of known material or two or more types of known materials as a mixture can be used as the solid electrolyte. The same compound as the compound forming the solid electrolyte layer 3 may be included as the solid electrolyte.

[Method for manufacturing all-solid-state secondary battery]

An example of a method for manufacturing the all-solid-state secondary battery 10 will be described below.

First, a laminate 4 is manufactured. The laminate 4 can be manufactured by, for example, sintering and may be manufactured by any one of a simultaneous sintering method and a sequential sintering method. The simultaneous sintering method is a method which includes: stacking materials for forming each of the layers; and then conducting batch sintering to manufacture the laminate 4. The sequential sintering method is a method of performing sintering whenever each layer is formed. The laminate 4 can be manufactured through smaller steps using the simultaneous sintering method than using the sequential sintering method. The laminate 4 manufactured using the simultaneous sintering method is denser than the laminate 4 manufactured using the sequential sintering method. The method for manufacturing the laminate 4 will be described below with reference to an example in which the laminate 4 is manufactured using the simultaneous sintering method.

First, the materials of the positive-electrode current collector 1A, the positive-electrode active material layer 1B, the solid electrolyte layer 3, and the negative electrode layer 2 forming the laminate 4 are made into pastes, that is, pastes corresponding to the materials of the layers are manufactured.

In the method for manufacturing the all-solid-state secondary battery according to this embodiment, a plurality of voids in contact with an Ag-containing phase are formed in the negative electrode layer 2, and, for example, the following procedures are employed to control an amount, shapes, and sizes thereof. In order to control an amount of voids V in the negative electrode layer 2, for example, a filler of an organic material is added to the negative-electrode active material, and an amount thereof is changed. In order to control the shapes of the voids in the negative electrode layer 2, for example, a degree of flatness of the filler of an organic material is changed, and a filler of an organic material having a high degree of flatness is used to form voids having a high aspect ratio. In order to control directions of the voids in the negative electrode, for example, the filler of an organic material is arranged in an in-plane direction at the time of applying. Specifically, a degree of alignment is controlled on the basis of an applying speed and an applied thickness using a doctor blade method. In order to control the sizes of the voids in the negative electrode layer, for example, the size of the filler of an organic material to be added is controlled, and the sizes of the voids are increased by using a large filler.

The method of making the materials used to manufacture the laminate 4 into pastes is not particularly limited, and, for example, a method of acquiring a paste by mixing powders of the materials in a vehicle can be used. The vehicle is a generic term of a medium in a liquid phase. The vehicle in this embodiment includes a solvent, a binding material (a binder), and a plasticizer. For example, dihydroperpineol can be used as the solvent. For example, ethyl cellulose can be used as the binder.

Then, green sheets corresponding to the layers constituting the laminate 4 are manufactured. A green sheet is obtained by applying the paste manufactured for a material of each layer of the laminate 4 to a substrate formed of a polyethylene terephthalate (PET) film, drying the paste according to necessity, and removing the substrate.

The method of applying a paste to a substrate is not particularly limited, and, for example, a known method such as screen printing, coating, transferring, or doctor blade can be used.

Then, the green sheets corresponding to the layers constituting the laminate 4 are stacked in a desired sequence and a desired number of layers to manufacture a laminated sheet which will be the laminate 4. Alignment, cutting, and the like are performed according to needs when the green sheets are stacked. For example, in a case where a parallel type or series-parallel type battery is manufactured as the all-solid-state secondary battery 10, alignment is performed such that an end face of the positive-electrode current collector 1A and an end face of the negative electrode layer 2 do not match, and the green sheets corresponding to the layers are stacked.

The green sheets which will be the laminated sheet may be a positive electrode unit and a negative electrode unit which are manufactured in advance.

The positive electrode unit is a green sheet in which the solid electrolyte layer 3, a sheet which will be the positive-electrode active material layer 1B, a sheet which will be the positive-electrode current collector 1A, and a sheet which will be the positive-electrode active material layer 1B are stacked in this order.

The structure of the negative electrode unit can be changed according to a desired negative electrode layer, and the negative electrode unit is a green sheet in which a second negative-electrode paste which will be a second phase including lithium titanate as a major component, a first negative-electrode paste which will be a first phase including an Ag-containing phase as a major component, and a second negative-electrode paste which will be the second phase including lithium titanate as a major component are stacked in this order.

When the positive electrode unit is used, the laminated sheet which will be the laminate 4 can be manufactured using a method of stacking the positive electrode unit and the negative electrode unit which will be the negative electrode layer 2 with a solid electrolyte green sheet interposed therebetween.

Then, the formed laminated sheet is pressed together to enhance adhesiveness between the layers and to form a laminate. The pressing may be performed by, for example, mold pressing, warm water isotropic pressing (WIP), cold-water isotropic pressing (CIP), or isostatic pressing. The pressing is preferably performed while heating. The heating temperature at the time of pressing can be set to be, for example, in a range of 40°C to 95°C. Subsequently, the laminated sheet obtained through the pressing is cut to obtain laminated chips using a dicing machine. Thereafter, the obtained laminated chips are subjected to sintering. Thereby, a laminate 4 consisting of a sintered body is obtained.

The de-bindering and the sintering can be performed, for example, in a state in which the laminate is placed on a ceramic base. The de-bindering and the sintering may be, for example, heating at a temperature of 550°C to 1100°C in the atmosphere. The heating time (the sintering time) can be set to be, for example, in a range of 0.1 hours to 10 hours. The heating temperature and the sintering time in the de-bindering and the sintering can be appropriately determined according to the composition of each of the layers of the laminate 4.

The sintered laminate 4 (sintered body) may be ground using a method of putting the sintered laminate 4 into a cylindrical vessel together with an abrasive such as alumina and performing barrel grinding. Thereby, chamfering of corners of the laminate 4 can be performed. Polishing of the laminate 4 may be performed using a sand blast. The sand blast can cut only a specific part of the surface of the laminate 4, which is preferable.

Then, the positive electrode terminal 5 and the negative electrode terminal 6 are formed on the opposite side surfaces of the formed laminate 4. The positive electrode terminal 5 and the negative electrode terminal 6 can be formed using a method such as a sputtering method, a dipping method, a screen printing method, and a spray coating method. Through the aforementioned steps, it is possible to manufacture an all-solid-state secondary battery 10.

With the all-solid-state secondary battery 10 according to this embodiment, the solid electrolyte layer 3 includes LSPO, the negative electrode layer 2 includes the Ag-containing phase 21, and voids V in contact with the Ag-containing phase 21 are formed in the negative electrode layer 2 as described above. Thereby, a stress due to expansion and contraction of the Ag-containing phase 21 at the time of charging/discharging in the negative electrode layer 2 can be relaxed using the voids V, the formation of a reactive layer can be prevented, the generation of cracks in the solid electrolyte layer 3 or the separation of the layers can be prevented, and excellent cycling characteristics can be achieved.

While an embodiment of the present invention has been described above in detail with reference to the drawings, the configurations in the embodiments and combinations thereof are only examples, and addition, omission, replacement, and other modification of a configuration are possible without departing from the features of the present invention.

For example, the all-solid-state secondary battery 10 in which the negative electrode layer 2 serves as both a negative-electrode current collector and a negative-electrode active material layer is illustrated in FIG. 1, but the negative electrode layer in the all-solid-state secondary battery may separately include a negative-electrode current collector and a negative-electrode active material layer. As such an all-solid-state secondary battery, for example, an all-solid-state secondary battery in which negative-electrode active material layers are provided on both sides of a main surface of the negative-electrode current collector may be manufactured.

For example, the all-solid-state secondary battery according to this embodiment may have a structure in which the negative electrode layer 2 has a stacked structure of a negative-electrode active material layer and a negative-electrode current collector. In a case where the negative electrode layer 2 has a stacked structure of a negative-electrode active material layer and a negative-electrode current collector, for example, an Ag-containing phase 21 is included in the negative-electrode active material layer, and voids V are formed to be in contact with the Ag-containing phase 21. In this case, an Ag-containing phase 21 may be additionally included in the negative-electrode current collector, and voids V may be formed to be in contact with a part of the Ag-containing phase 21 in the negative-electrode current collector.

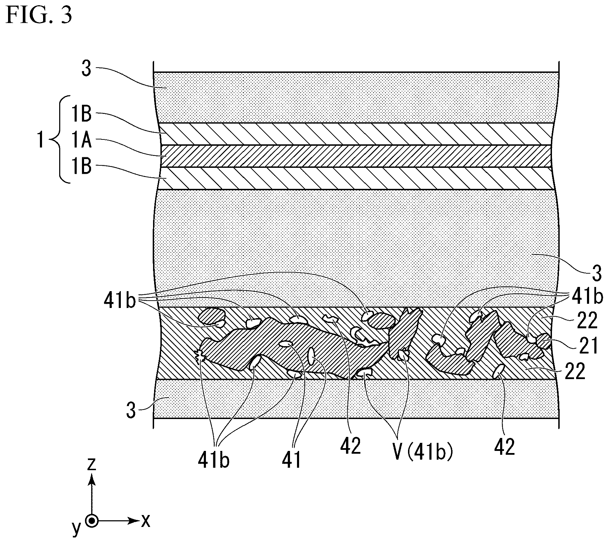

For example, a first phase including the Ag-containing phase 21 and a second phase 22 including lithium titanate may be provided. A sectional view of an all-solid-state secondary battery in which the vicinity of the negative electrode layer is enlarged is illustrated as an all-solid-state secondary battery having the aforementioned structure in FIG. 3. In this case, for example, the negative electrode layer has a structure in which the Ag-containing phase 21 which is the first phase is interposed between the second phases 22 of lithium titanate or the like in the z direction, and voids V are formed in contact with an interface between the Ag-containing phase 21 which is the first phase and the second phase 22. The first phase and the second phase may be present in contact in a layered shape, a partial region of the first phase may be located outside of the second phase in the z direction such that the partial region of the first phase is closer to the solid electrolyte layer 3 than the second phase, voids may be formed in contact with an interface between the first phase and the second phase, and these structures may be combined.

In these modified examples, the amount of voids and the structure can be set to be the same as in the all-solid-state secondary battery 10 according to the embodiment. A proportion of voids in contact with an AgPd alloy among the plurality of voids included in the laminate 4 is preferably equal to or greater than 50%.

The voids V are preferably present at an interface between the Ag-containing phase 21 and lithium titanate or an interface between the Ag-containing phase 21 and the solid electrolyte layer 3. In a case where voids are present in other places, a stress due to expansion and contraction of the negative electrode is not relaxed, and the cycling characteristics are not improved.

Examples

Examples of the present invention will be described below. The present invention is not limited to the following examples.

[Example 1]

(1) Manufacturing solid electrolyte paste

First a solid electrolyte paste was manufactured in the following procedures. Particles represented by $Li_{3+x}Si_xP_{1-x}O_4$ (where x in Expression (1) was 0.5), ethyl cellulose, and dihydroperpineol were put into a ball mill and a mixture was wet-mixed; and thereby, a solid electrolyte paste was obtained.

(2) Manufacturing positive-electrode current collector paste

Powder of an Ag-Pd alloy including Ag and Pd at a molar ratio of 8:2 (Ag:Pd), ethyl cellulose, and dihydroperpineol were put into a ball mill and a mixture was wet-mixed; and thereby, a positive-electrode current collector paste according to Example 1 was manufactured.

(3) Manufacturing positive-electrode active material layer paste

Powder of lithium cobalt oxide ($LiCoO_2$), ethyl cellulose, and dihydroperpineol were put into a ball mill and a mixture was wet-mixed; and thereby, a positive-electrode active material paste according to Example 1 was manufactured.

(4) Manufacturing negative electrode paste

AgPd powder of an AgPd alloy including Ag and Pd at a molar ratio of 8:2 (Ag:Pd), ethyl cellulose, and dihydroperpineol were put into a ball mill and a mixture was wet-mixed; and thereby, a first negative electrode paste was manufactured. A volume ratio of the AgPd powder and polymer particles was set to 95:5, and particles with an aspect ratio of 1:3 and a particle size of 0.5 $\mu$m which was a size of a sphere having the same volume were used as the polymer particles.

Lithium titanate powder, ethyl cellulose, and dihydroperpineol were put into a ball mill and a mixture was wet-mixed; and thereby, a second negative electrode paste was manufactured.

(5) Manufacturing positive electrode unit to be positive electrode layer

The positive-electrode active material layer paste was applied in a thickness of 5 $\mu$m to a substrate formed of a polyethylene terephthalate (PET) film through screen printing and then was dried for 5 minutes at 80°C. The positive-electrode current collector paste was applied in a thickness of 5 $\mu$m to the dried positive-electrode active material layer paste through screen printing and then was dried for 5 minutes at 80°C. The positive-electrode active material layer paste was applied in a thickness of 5 $\mu$m to the dried positive-electrode current collector paste through screen printing and then was dried for 5 minutes at 80°C, and next, laminated layers were separated from the substrate. Accordingly, a positive electrode unit in which the positive-electrode active material layer, the positive-electrode current collector layer, and the positive-electrode active material layer were stacked in this order was obtained.

(6) Manufacturing solid electrolyte green sheet

The solid electrolyte paste was applied in a thickness of 20 $\mu$m to a substrate formed of a polyethylene terephthalate (PET) film through screen printing and then was dried for 10 minutes at 80°C, and next, the layer was separated from the substrate. Accordingly, a solid electrolyte green sheet to be the solid electrolyte layer was obtained.

(7) Manufacturing negative electrode unit to be negative electrode layer

The second negative electrode paste was applied in a thickness of 5 $\mu$m to a substrate formed of a polyethylene terephthalate (PET) film through screen printing and then was dried for 5 minutes at 80°C. The first negative electrode paste was applied in a thickness of 5 $\mu$m to the dried second negative electrode paste through screen printing and then was dried for 5 minutes at 80°C. The second negative electrode paste was applied in a thickness of 5 $\mu$m to the dried first negative electrode paste through screen printing and then was dried for 5 minutes at 80°C, and next, laminated layers were was separated from the substrate. Accordingly, a negative electrode unit in which the second negative electrode layer, the first negative electrode layer, and the second negative electrode layer were stacked in this order was obtained.

(8) Manufacturing laminate

Each of 25 positive electrode units and each of 25 negative electrode units were alternately stacked such that the solid electrolyte green sheet was interposed therebetween to obtain a laminated sheet to be the laminate. The units were stacked such that the top surface and the bottom surface of the laminated sheet were the solid electrolyte units. The units were stacked such that the top surface and the bottom surface of the laminated sheet were the solid electrolyte green sheets. The positive electrode units and the negative electrode units were shifted and stacked such that the positive electrode units extended to only one end face of the laminated sheet and the negative electrode units extended to only the opposite end face.

Subsequently, the manufactured green sheets were pressed together and were cut using a dicing machine to manufacture laminated chips. Thereafter, the laminated chips were subjected to de-bindering and sintering; and thereby, a laminate according to Example 1 including a sintered body was obtained. De-bindering was performed by heating the laminate in the atmosphere at 500°C for 10 hours. Sintering was performed in the atmosphere at 900°C for 1 hour. De-bindering and sintering could be performed in a batch process.

Then, a positive electrode terminal and a negative electrode terminal were formed on the opposite side surfaces of the manufactured laminate through Au sputtering; and thereby, an all-solid-state secondary battery according to Example 1 was obtained. The positive electrode terminal and the negative electrode terminal were formed such that the positive electrode terminal was bonded to the positive electrode unit and the negative electrode terminal was bonded to the negative electrode unit.

[Example 2]

An all-solid-state secondary battery was manufactured in the same method as in Example 1 except that the particle size of the polymer particles in the first negative electrode paste was changed to 0.005 $\mu$m.

[Example 3]

An all-solid-state secondary battery was manufactured in the same method as in Example 1 except that the particle size of the polymer particles in the first negative electrode paste was changed to 0.05 $\mu$m.

[Example 4]

An all-solid-state secondary battery was manufactured in the same method as in Example 1 except that the particle size of the polymer particles in the first negative electrode paste was changed to 1 $\mu$m.

[Example 5]

An all-solid-state secondary battery was manufactured in the same method as in Example 1 except that the particle size of the polymer particles in the first negative electrode paste was changed to 5 $\mu$m.

[Example 6]

An all-solid-state secondary battery was manufactured in the same method as in Example 1 except that the volume ratio of the AgPd powder and the polymer particles in the first negative electrode paste was changed to 99.9:0.1.

[Example 7]

An all-solid-state secondary battery was manufactured in the same method as in Example 1 except that the volume ratio of the AgPd powder and the polymer particles in the first negative electrode paste was changed to 99:1.

[Example 8]

An all-solid-state secondary battery was manufactured in the same method as in Example 1 except that the volume ratio of the AgPd powder and the polymer particles in the first negative electrode paste was changed to 90:10.

[Example 9]

An all-solid-state secondary battery was manufactured in the same method as in Example 1 except that the volume ratio of the AgPd powder and the polymer particles in the first negative electrode paste was changed to 80:20.

[Example 10]

An all-solid-state secondary battery was manufactured in the same method as in Example 12 except that the aspect ratio of the polymer particles in the first negative electrode paste was changed to 1:1.

[Example 11]

An all-solid-state secondary battery was manufactured in the same method as in Example 1 except that the aspect ratio of the polymer particles in the first negative electrode paste was changed to 1:10.

[Example 12]

An all-solid-state secondary battery was manufactured in the same method as in Example 1 except that the negative electrode layer was formed without using the second negative electrode paste. Through this change, the structure in which the negative electrode layer was formed of substantially an AgPd alloy and lithium titanate in Examples 1 to 11 was changed to a structure in which the negative electrode layer was formed of substantially an AgPd alloy.

[Example 13]

An all-solid-state secondary battery was manufactured in the same method as in Example 12 except that the aspect ratio of the polymer particles in the first negative electrode paste was changed to 1:10. In Example 13, similarly to Example 12, the negative electrode layer was formed of substantially an AgPd alloy.

[Example 14]

An all-solid-state secondary battery was manufactured in the same method as in Example 1 except that the volume ratio of the AgPd powder and the polymer particles in the first negative electrode paste was changed to 89:11.

[Example 15]

An all-solid-state secondary battery was manufactured in the same method as in Example 1 except that the particle size of the polymer particles in the first negative electrode paste was changed to 0.01 $\mu$m.

[Example 16]

An all-solid-state secondary battery was manufactured in the same method as in Example 1 except that the particle size of the polymer particles in the first negative electrode paste was changed to 3 $\mu$m.

[Example 17]

An all-solid-state secondary battery was manufactured in the same method as in Example 1 except that the aspect ratio of the polymer particles in the first negative electrode paste was changed to 1:5.

[Example 18]

An all-solid-state secondary battery was manufactured in the same method as in Example 12 except that the volume ratio of the AgPd powder and the polymer particles in the first negative electrode paste was changed to 99:1.

[Example 19]

An all-solid-state secondary battery was manufactured in the same method as in Example 12 except that the volume ratio of the AgPd powder and the polymer particles in the first negative electrode paste was changed to 90:10.

[Example 20]

An all-solid-state secondary battery was manufactured in the same method as in Example 12 except that the particle size of the polymer particles in the first negative electrode paste was changed to 0.01 $\mu$m.

[Example 21]

An all-solid-state secondary battery was manufactured in the same method as in Example 12 except that the particle size of the polymer particles in the first negative electrode paste was changed to 3 $\mu$m.

[Comparative Example 1]

An all-solid-state secondary battery was manufactured in the same method as in Example 1 except that polymer particles were not added to the first negative electrode paste.

[Comparative Example 2]

An all-solid-state secondary battery was manufactured in the same method as in Example 1 except that the solid electrolyte paste was manufactured by putting solid electrolyte particles formed of $Li_{1.3}Al_{0.3}Ti_{1.7}(PO_4)_3$, ethyl cellulose, and dihydroperpineol into a ball mill and wet-mixing the mixture.

[Comparative Example 3]

An all-solid-state secondary battery was manufactured in the same method as in Example 12 except that polymer particles were not added to the first negative electrode paste.

[Comparative Example 4]

An all-solid-state secondary battery was manufactured in the same method as in Example 12 except that the solid electrolyte paste was manufactured by putting solid electrolyte particles formed of $Li_{1.3}Al_{0.3}Ti_{1.7}(PO_4)_3$, ethyl cellulose, and dihydroperpineol into a ball mill and wet-mixing the mixture.

<Analysis of all-solid-state secondary battery>

The all-solid-state secondary batteries manufactured as described above were analyzed as follows.

(Cycle test)

A cycle test of the all-solid-state secondary batteries 10 according to Examples 1 to 20 and Comparative Examples 1 to 4 was performed using an electrochemical tester (manufactured by Hokuto Denko Corporation) and using the following method.
A procedure of performing constant-current charging (CC charging) until a battery voltage became 3.9 V at a constant current of 100 $\mu$A in an environment of 60°C and then performing discharging (CC discharging) until the battery voltage became 0 V at the constant current of 100 $\mu$A was defined as one cycle, and 10 cycles were repeated. The discharge capacity ($\mu$Ah) at the tenth cycle was measured as an initial capacity $Q_1$.
With regard to the all-solid-state secondary battery of which the initial capacity $Q_1$ was measured, constant-current charging (CC charging) was performed until the battery voltage became 3.9 V at the constant current of 100 $\mu$A in the environment of 60°C, and then discharging (CC discharging) was performed until the battery voltage became 0 V at the constant current of 100 $\mu$A, and this charging and discharge was counted as one cycle, and 1000 cycles of charging and discharging were performed. Thereafter, a discharge capacity $Q_2$ after the 1000-th cycle of charging and discharging was ended was measured.

A capacity retention E after 1000 cycles was calculated from the measured discharge capacities $Q_1$ and $Q_2$ using the following expression. The results are shown in Table 1.

$$E(\%)=(Q_2/Q_1)\times 100$$

(Structure analysis)

Structures of the all-solid-state secondary batteries according to Examples 1 to 13 and Comparative Example 1 before charging and discharging were analyzed using a scanning electron microscope (model number: S4800 manufactured by Hitachi Hi-technologies Co., Ltd.). Specifically, first, a scanning electron microscope image of a cross-section parallel to the stacking direction was obtained for each of the all-solid-state secondary batteries according to Examples 1 to 13 and Comparative Example 1. An acceleration voltage of 10 kV was set as the observation conditions for the scanning electron microscope. In Examples 1 to 11, an all-solid-state secondary battery having the negative electrode structure illustrated in FIG. 3 was manufactured. In FIG. 3, reference signs corresponding to the constituents described above with reference to FIG. 1 are illustrated for the purpose of convenience of explanation. In Example 1 of which an example of the structure is illustrated in FIG. 3, the negative electrode layer was formed from a material including a mixture of an AgPd alloy and lithium titanate as a major component; and thereby, the first phase including an AgPd alloy as the Ag-containing phase 21 was interposed between the second phases 22 including lithium titanate in the negative electrode layer 2, and the negative electrode layer 2 was interposed between the solid electrolyte layers 3. In Examples 12 and 13, the negative electrode layer was formed from a material including an AgPd alloy as a major component; and thereby, the all-solid-state secondary battery had the structure illustrated in FIGS. 1 and 2, and the negative electrode layer 2 was formed of the Ag-containing phase 21.

Regions in which voids were formed were confirmed by performing binarization using a mode method on the obtained scanning electron microscope image on the basis of brightness. Subsequently, a region interposed between the solid electrolyte layers was confirmed as the negative electrode layer. In Examples 1 to 13, most voids were in contact with AgPd. In Comparative Example 1, no void was confirmed. In Examples 1 to 11, voids were formed in contact with a part of an interface between the first phase and the second phase. In Examples 12 and 13, voids were formed in contact with a part of an interface between the Ag-containing phase and the solid electrolyte.

Subsequently, the area of the negative electrode layer and the area of the voids in the same scanning electron microscope image (with a magnification of 5000) through image analysis on the basis of the binarized scanning electron microscope image were calculated, and a void ratio of the voids to the negative electrode layer was calculated by dividing the area of the voids by the area of the negative electrode layer and was considered as the volume proportion of the voids in the negative electrode layer. An arithmetic mean of the areas of all the voids in the scanning electron microscope image was calculated, and a diameter of a circle having the same area as the arithmetic mean was calculated. The aspect ratio ($L_{VX}/L_{VZ}$) of each void was calculated by measuring the void length in the stacking direction of the laminate and the void length in the extending direction of the negative electrode layer and dividing the void length in the extending direction of the negative electrode layer by the void length in the stacking direction of the laminate.

Measurement results in Examples 1 to 13 and Comparative Example 1 are shown in Table 1.

[Table 1]

| | | Structure of negative electrode layer | Porous ratio [vol%] in negative electrode layer | First pore | First void ratio | Second pore | Third pore | Pore diameter [μm] | Aspect ratio ($L_{VX}/L_{VZ}$) | Cycling characteristics (capacity after 1000 cycles/initial capacity) [%] |
|---|---|---|---|---|---|---|---|---|---|---|
| Ex. 1 | | AgPd/LTO | 8 | Yes | 5 | No | Yes | 0.5 | 3 | 95 |
| Ex. 2 | | AgPd/LTO | 8 | Yes | 5 | No | Yes | 0.005 | 3 | 85 |
| Ex. 3 | | AgPd/LTO | 8 | Yes | 5 | No | Yes | 0.05 | 3 | 92 |
| Ex. 4 | | AgPd/LTO | 8 | Yes | 5 | No | Yes | 1 | 3 | 93 |
| Ex. 5 | | AgPd/LTO | 8 | Yes | 5 | No | Yes | 5 | 3 | 91 |
| Ex. 6 | | AgPd/LTO | 0.2 | Yes | 0.1 | No | Yes | 0.5 | 3 | 90 |
| Ex. 7 | | AgPd/LTO | 2 | Yes | 1 | No | Yes | 0.5 | 3 | 95 |

(continued)

| | | Structure of negative electrode layer | Porous ratio [vol%] in negative electrode layer | First pore | First void ratio | Second pore | Third pore | Pore diameter [μm] | Aspect ratio ($L_{VX}/L_{VZ}$) | Cycling characteristics (capacity after 1000 cycles/initial capacity) [%] |
|---|---|---|---|---|---|---|---|---|---|---|
| | Ex. 8 | AgPd/LTO | 13 | Yes | 10 | No | Yes | 0.5 | 3 | 91 |
| | Ex. 9 | AgPd/LTO | 23 | Yes | 20 | No | Yes | 0.5 | 3 | 85 |
| | Ex. 10 | AgPd/LTO | 8 | Yes | 5 | No | Yes | 0.5 | 1 | 90 |
| | Ex. 11 | AgPd/LTO | 8 | Yes | 5 | No | Yes | 0.5 | 10 | 93 |
| | Ex. 14 | AgPd/LTO | 13 | Yes | 11 | No | Yes | 0.5 | 3 | 84 |
| | Ex. 15 | AgPd/LTO | 8 | Yes | 5 | No | Yes | 0.01 | 3 | 90 |
| | Ex. 16 | AgPd/LTO | 8 | Yes | 5 | No | Yes | 3 | 3 | 92 |
| | Ex. 17 | AgPd/LTO | 8 | Yes | 5 | No | Yes | 0.5 | 5 | 95 |
| | Com. Ex. 1 | AgPd/LTO | - | No | - | No void | - | - | - | 80 |
| | Com. Ex. 2 | AgPd/LTO | 8 | Yes | 5 | No | Yes | 0.5 | 3 | 80 |
| | Ex. 12 | AgPd | 8 | Yes | 5 | Yes | No | 0.5 | 3 | 93 |
| | Ex. 13 | AgPd | 8 | Yes | 5 | Yes | No | 0.5 | 10 | 93 |
| | Ex. 18 | AgPd | 2 | Yes | 1 | Yes | No | 0.5 | 5 | 93 |
| | Ex. 19 | AgPd | 13 | Yes | 10 | Yes | No | 0.5 | 3 | 93 |
| | Ex. 20 | AgPd | 8 | Yes | 5 | Yes | No | 0.01 | 3 | 93 |
| | Ex. 21 | AgPd | 8 | Yes | 5 | Yes | No | 3 | 3 | 93 |
| | Com. Ex. 3 | AgPd | - | No | - | No void | - | - | - | 80 |
| | Com. Ex. 4 | AgPd | 8 | Yes | 5 | No | No | 0.5 | 3 | 80 |

In the all-solid-state secondary batteries according to Examples 1 to 13, the solid electrolyte layer included LSPO, the negative electrode layer included Ag or an Ag alloy, and voids were formed in a part of an interface between the LSPO and the Ag-containing phase in the negative electrode layer. In the all-solid-state secondary battery according to Comparative Example 1, no void was formed in a part of the interface between the LSPO and the Ag-containing phase. It was seen from Table 1 that the cycling characteristics could be greatly improved with the all-solid-state secondary batteries according to Examples 1 to 13 in comparison with the all-solid-state secondary battery according to Comparative Example 1.

In Examples 1, 7, and 8, the void ratio of the voids in the negative electrode layer was equal to or greater than 1% and equal to or less than 10%, and it was seen that the cycling characteristics in Examples 1, 7, and 8 were more excellent than those in Example 6 in which the void ratio was 0.05% and Example 9 in which the void ratio was 20%. This teaches that, in a case where the void ratio of the voids in the negative electrode layer is small, relaxation of a stress caused by expansion and contraction of the negative electrode due to charging and discharging is not sufficient and, in a case where there are many voids, the voids may be connected due to the stress.

In the all-solid-state secondary batteries according to Examples 1 to 9 and Examples 11 to 13, it was seen that the aspect ratio of the voids was larger than 1 and the axial direction of many voids was substantially parallel to the extending direction of the negative electrode layer from the electron microscope image. Since voids are in contact with the AgPd alloy, it is possible to efficiently relax expansion and contraction of the voids in comparison with voids having an axial direction parallel to the stacking direction and it is possible to improve cycling characteristics. This effect was ascertained from the results that the cycling characteristics in Example 1 in which the aspect ratio was 3 was more excellent than those in Example 10 in which the aspect ratio was 1.

Industrial Applicability

In comparison with the related art, it is possible to provide an all-solid-state battery having high safety and excellent characteristics.

Reference Signs List

| 1 | Positive electrode layer |
| 1A | Positive-electrode current collector |
| 1B | Positive-electrode active material layer |
| 2 | Negative electrode layer |
| 3 | Solid electrolyte layer |
| 4 | Laminate |
| 5 | Positive electrode terminal |
| 6 | Negative electrode terminal |
| 10 | All-solid-state secondary battery |
| V | Void |
| $L_{Vx}$ | Void length in extending direction of negative electrode layer |
| $L_{Vz}$ | Void length in stacking direction of laminate |
| 21 | Ag-containing phase (first phase) |
| 22 | Second phase |
| 31 | LSPO |
| 41 | First void |
| 41a | Second void |
| 41b | Third void |
| 42 | Void not in contact with Ag-containing phase |

**Claims**

1. An all-solid-state secondary battery comprising a laminate including a positive electrode layer, a negative electrode layer, and a solid electrolyte layer interposed between the positive electrode layer and the negative electrode layer,

   wherein the solid electrolyte layer includes a compound represented by Expression (1),
   wherein the negative electrode layer includes an Ag-containing phase,
   wherein a plurality of voids are formed in the negative electrode layer, and
   wherein at least a part of the voids are first voids formed in contact with the Ag-containing phase:

   $$Li_{3+x}Si_xP_{1-x}O_4 \qquad (1)$$

   (where 0<x<1 is satisfied in Expression (1)).

2. The all-solid-state secondary battery according to claim 1,
   wherein a diameter of the first voids is equal to or greater than 0.01 $\mu$m and equal to or less than 3.0 $\mu$m.

3. The all-solid-state secondary battery according to claim 1 or 2,
   wherein a volume proportion of the first voids which are formed in contact with the Ag-containing phase in the negative electrode layer is equal to or greater than 1% and equal to or less than 10%.

4. The all-solid-state secondary battery according to claim 1 or 2,
   wherein an aspect ratio of a length of the voids in an extending direction of the negative electrode layer to a length of the first voids in a stacking direction of the laminate is equal to or greater than 3.

5. The all-solid-state secondary battery according to claim 1 or 2,
   wherein at least a part of the voids formed in contact with the Ag-containing phase are second voids which are formed at an interface between the solid electrolyte layer and the Ag-containing phase.

6. The all-solid-state secondary battery according to claim 1 or 2,
wherein a ratio of the second voids to the total first voids is in a range of 80% to 100%.

7. The all-solid-state secondary battery according to claim 1 or 2,
wherein the negative electrode layer consists of the Ag-containing phase.

8. The all-solid-state secondary battery according to claim 1 or 2,

wherein the negative electrode layer includes a first phase which includes the Ag-containing phase and a second phase which includes lithium titanate and which sandwiches the first phase in a stacking direction, and
wherein the negative electrode layer includes third voids which are in contact with an interface between the first phase and the second phase.

9. The all-solid-state secondary battery according to claim 7,
wherein a ratio of the third voids to the total first voids is in a range of 50% to 100%.

FIG. 1

FIG. 2

FIG. 3

## INTERNATIONAL SEARCH REPORT

International application No.

**PCT/JP2022/036171**

### A. CLASSIFICATION OF SUBJECT MATTER

*H01M 10/0585*(2010.01)i; *H01M 4/131*(2010.01)i; *H01M 4/134*(2010.01)i; *H01M 4/36*(2006.01)i; *H01M 4/38*(2006.01)i; *H01M 4/485*(2010.01)i; *H01M 4/66*(2006.01)i; *H01M 10/0562*(2010.01)i
FI:  H01M10/0585; H01M10/0562; H01M4/38 Z; H01M4/134; H01M4/485; H01M4/131; H01M4/36 E; H01M4/66 A

According to International Patent Classification (IPC) or to both national classification and IPC

### B. FIELDS SEARCHED

Minimum documentation searched (classification system followed by classification symbols)

H01M10/0585; H01M4/131; H01M4/134; H01M4/36; H01M4/38; H01M4/485; H01M4/66; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2007/135790 A1 (INCORPORATED NATIONAL UNIVERSITY IWATE UNIVERSITY) 29 November 2007 (2007-11-29) paragraphs [0050]-[0059] | 1-3, 8-9 |
| A | | 4-7 |
| A | WO 2008/099468 A1 (INCORPORATED NATIONAL UNIVERSITY IWATE UNIVERSITY) 21 August 2008 (2008-08-21) | 1-9 |
| A | JP 2011-216234 A (NAMICS CORP) 27 October 2011 (2011-10-27) | 1-9 |
| A | JP 2001-68150 A (KYOCERA CORP) 16 March 2001 (2001-03-16) | 1-9 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036171**

| Patent document cited in search report | | | Publication date (day/month/year) | Patent family member(s) | | | Publication date (day/month/year) |
|---|---|---|---|---|---|---|---|
| WO | 2007/135790 | A1 | 29 November 2007 | US 2009/0202912 A1 paragraphs [0082]-[0093] EP 2058892 A1 CN 101461087 A KR 10-2009-0030271 A | | | |
| WO | 2008/099468 | A1 | 21 August 2008 | US 2010/0003592 A1 CN 101622749 A KR 10-2010-0015310 A | | | |
| JP | 2011-216234 | A | 27 October 2011 | US 2013/0017454 A1 WO 2011/125481 A1 CN 102844928 A KR 10-2013-0083828 A | | | |
| JP | 2001-68150 | A | 16 March 2001 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022058998 A

- JP 2022025903 A

**Non-patent literature cited in the description**

- *Solid State Ionics*, 2015, vol. 283, 109-114